(19) Europäisches Patentamt
European Patent Office
Office européen des brevets

(11) **EP 1 746 714 B1**

(12) **EUROPÄISCHE PATENTSCHRIFT**

(45) Veröffentlichungstag und Bekanntmachung des Hinweises auf die Patenterteilung:
**05.11.2008 Patentblatt 2008/45**

(51) Int Cl.:
*H02P 5/46* *(2006.01)* *H02K 49/04* *(2006.01)*
*H02K 49/10* *(2006.01)*

(21) Anmeldenummer: **05015993.8**

(22) Anmeldetag: **22.07.2005**

(54) **Elektrisches Getriebe und Verfahren zu dessen Betrieb**

Electric transmission and method for it's operation

Transmission électrique et procédé pour son fonctionnement

(84) Benannte Vertragsstaaten:
**DE FR IT**

(43) Veröffentlichungstag der Anmeldung:
**24.01.2007 Patentblatt 2007/04**

(73) Patentinhaber: **Continental Automotive GmbH
30165 Hannover (DE)**

(72) Erfinder: **Schäfer, Heinz, Dr.
97230 Estenfeld (DE)**

(56) Entgegenhaltungen:
**EP-A- 1 480 321 US-A1- 2004 026 143
US-B1- 6 401 849**

EP 1 746 714 B1

**Beschreibung**

Die Erfindung betrifft ein elektrisches Getriebe, insbesondere für ein Kraft- oder Hybridfahrzeug, gemäß dem Oberbegriff des Anspruchs 1. Ein derartiges elektrisches Antriebsaggregat ist aus der EP 1 480321 A1 bekannt. Unter einem Hydridfahrzeug wird hierbei ein Kraftfahrzeug mit einem Verbrennungsmotor und mit einem elektrischen Antrieb verstanden. Die Erfindung bezieht sich weiter auf ein Verfahren zum Betreiben eines elektrischen Getriebes.

Bei einem Kraftfahrzeug, insbesondere bei einem Kraftfahrzeug mit einem Verbrennungsmotor als Brennkraftmaschine, ist die geforderte oder gewünschte Drehmoment- und/oder Drehzahlanpassung zwischen dem Verbrennungsmotor bzw. der Brennkraftmaschine und den Antriebsrädern, insbesondere hinsichtlich der Anfahrverluste (Treibstoffverbrauch), problematisch. So wird z.B. beim Anfahren des Kraftfahrzeugs ein relativ großes Drehmoment an den Antriebsrädern gefordert, während bei hoher konstanter Geschwindigkeit des Kraftfahrzeugs ein vergleichsweise geringes Drehmoment benötigt wird. Bisherige mechanische Lösungen mit einer Anfahrkupplung und mit einem Schaltgetriebe oder mit einem Drehmomentwandler und mit einem Automatikgetriebe führen nicht zu den gewünschten geringen Energieverlusten beim Anfahren. Zudem führen, insbesondere bei häufigem Anfahren, hohe Anfahrverluste zu einem hohen Treibstoffverbrauch

Aus der WO 03/075437A1 ist ein spezielles elektrisches Getriebe als elektromechanischer Konverter mit einer ersten elektrischen Maschine bekannt, die über einen Inverter und mit diesem verbundene Schleifringe erregt wird. Der erste Inverter ist gleichstromseitig mit einem zweiten Inverter verbunden, der wechselstromseitig an den Stator einer zweiten elektrischen Maschine geführt ist. Während die erste elektrische Maschine rotorseitig über eine Kurbelwelle mit der Brennkraftmaschine verbunden ist, ist die zweite elektrische Maschine, ebenfalls rotorseitig, mit der Kardanwelle und über diese mit einem Differential für die Antriebsräder des Kraftfahrzeugs verbindbar. Die Antriebs- oder Kurbelwelle und die Abtriebs- oder Kardanwelle stehen kupplungslos über den rotierenden Stator der ersten Maschine bzw. den rotierenden Rotor der zweiten Maschine berührungslos in Verbindung.

Unter Vernachlässigung ohmscher Verluste nimmt bei dem bekannten elektrischen Getriebe die über die Schleifringe erregte erste Maschine Blindleistung auf. Zudem wird durch den Verbrennungsmotor bzw. die Brennkraftmaschine über die Kurbelwelle Wirkleistung in die erste elektrische Maschine eingeleitet. Bei stillstehendem Kraftfahrzeug wird zunächst keine mechanische Leistung in die Abtriebs- oder Kardanwelle eingeleitet. Dies bedeutet jedoch, dass die gesamte, durch den Verbrennungsmotor eingespeiste Wirkleistung über den Rotor der ersten Maschine und über das Schleifringsystem in den der ersten Maschine zugeordneten Inverter übertragen wird. Hierbei entsteht ein Drehmoment am drehbar gelagerten Stator der ersten Maschine, der mit dem Rotor der zweiten Maschine und mit der Abtriebs- oder Kardanwelle mechanisch verbunden ist. Das Drehmoment kann dabei als Reaktionsmoment die bei der Anfahrdrehzahl des Motors mögliche Größe des Verbrennungsmotors annehmen. Die von der ersten Maschine und dem zugeordneten Inverter aufgenommene Wirkleistung wird dann dem der zweiten Maschine zugeordneten Inverter zur Verfügung gestellt. Zur Erzeugung des erforderlichen zusätzlichen Drehmomentes durch die zweite Maschine muss die gesamte Wirkleistung über die den beiden Maschinen zugeordneten Inverter der zweiten Maschine zugeführt werden.

Bei zunächst stillstehendem Kraftfahrzeug, bei dem von der Abtriebs- oder Kardanwelle keine Drehzahl abgefordert wird, wird diese Wirkleistung im Rotor der zweiten Maschine als Schlupfleistung in Wärme umgesetzt, um das entsprechende zusätzliche Drehmoment zu erzeugen. Werden darüber hinaus auch die bei realen Systemen auftretenden zusätzlichen ohmschen Verluste in den beiden elektrischen Maschinen berücksichtigt, so muss während des Anfahrvorganges des Kraftfahrzeugs aus einem Speicher zusätzlich Wirkleistung aufgenommen bzw. von der ersten Maschine erzeugt werden, um das erforderliche zusätzliche Drehmoment in der zweiten Maschine zu erzeugen.

Der Erfindung liegt die Aufgabe zugrunde, ein besonders geeignetes elektrisches Getriebe, insbesondere für ein Kraft-oder Hybridfahrzeug anzugeben. Des Weiteren soll ein besonders geeignetes Verfahren zum Betreiben eines derartigen elektrischen Getriebes angegeben werden.

Bezüglich des elektrischen Getriebes wird die genannte Aufgabe erfindungsgemäß gelöst durch die Merkmale des Anspruchs 1. Vorteilhafte Ausgestaltungen sind Gegenstand der auf diesen rückbezogenen Unteransprüche.

So weist das elektrische Getriebe eine erste elektrische Maschine mit einem Stator und mit einem Rotor auf. Der Rotor kann über eine erste Welle mit einer Brennkraftmaschine eines Kraftfahrzeugs verbunden und somit von dieser antreibbar sein. Eine mit der ersten elektrischen Maschine kupplungslos gekoppelte zweite elektrische Maschine weist einen ersten Rotor und einen zweiten Rotor auf, der mit einer zweiten Welle, beispielsweise der Kardanwelle eines Kraftfahrzeugs, verbindbar ist. Der den ersten Rotor der zweiten Maschine koaxial umgebende zweite Rotor weist zur Erzeugung eines ersten Drehfeldes eine dem ersten Rotor zugewandte innere Wicklung und eine einem Stator zugewandte äußere Wicklung auf. Diese äußere Wicklung ist mit der inneren Wicklung zur Erzeugung eines zum ersten Drehfeld gegensinnigen zweiten Drehfeldes verschaltet.

Eine zur Steuerung der beiden elektrischen Maschinen vorgesehene Steuer- und/oder Regelvorrichtung weist einen der ersten Maschine zugeordneten ersten Inverter und einen der zweiten Maschine zugeordneten zweiten Inverter auf. Die beiden Inverter sind zweckmäßigerweise als bidirektionale DC/AC-Wandler, beispielsweise aus ansteuerbaren Leistungshalbleitern, aufgebaut. Die beiden Inverter oder Wandler sind unter Bildung eines gemeinsamen Zwischenkreises gleichstromseitig miteinander verbunden. Wechselstromseitig sind die beiden Inverter mit der jeweils zugeordneten elektrischen Maschine verbunden. Die jeweilige Verbindung ist dabei zu dem jeweiligen Stator der entsprechenden Maschine hergestellt. An den Zwischenkreis ist ein elektrischer Speicher, beispielsweise in Form einer Batterie oder einer Kondensatoranordnung, angeschlossen.

Der Steuervorrichtung ist zudem zweckmäßigerweise eine Regeleinrichtung zugeordnet. Dabei weist die Regeleinrichtung einen dem ersten Inverter der ersten Maschine zugeordneten ersten Regler und einen dem zweiter Inverter der zweiten Maschine zugeordneten zweiten Regler auf. Die Regler sind untereinander und zweckmäßigerweise mit einem Informations- oder Datenbus, insbesondere einem so genannten CAN-Bus, verbunden. Dieser ist zweckmäßigerweise seinerseits an einen Drehmomentkoordinator für eine Brennkraftmaschine und/oder gegebenenfalls an ein Regel- oder Steuergerät der Brennkraftmaschine geführt. Die Regeleinrichtung dient zur Drehmomentsteuerung und zur Drehzahlregelung der ersten und/oder der zweiten Maschine, so dass diese in den Betriebsarten "Drehmomentsteuerung" und "Drehzahlregelung" betrieben werden können.

Die Regeleinrichtung ist zudem signaltechnisch verbunden mit einem an die erste Welle (Antriebs- oder Kurbelwelle) geführten Lagegeber und mit einem an die zweite Welle (Abtriebs- oder Kurbelwelle) geführten Drehzahlgeber.

In besonders bevorzugter Ausgestaltung ragt der Rotor der ersten elektrischen Maschine in die zweite elektrische Maschine hinein und bildet dort deren ersten Rotor. Dabei ist der Rotor umfangsseitig mit einem Permanentmagneten oder einer Dauermagnetanordnung versehen. Die erste elektrische Maschine ist somit zweckmäßigerweise als permanent erregte Synchronmaschine ausgeführt, deren Stator mit dem ersten Inverter wechselstromseitig verbunden ist.

Die erste elektrische Maschine kann dabei auch als so genannte Memory-Maschine mit variabler Magnetisierung ausgeführt sein. Bei einer solchen Memory-Maschine kann über die Statorwicklung der Rotor kurzzeitig entmagnetisiert werden, um anschließend erneut magnetisiert zu werden bzw. umgekehrt. Hierdurch ist ein gewisser "Leerlaufbetrieb" ermöglicht. Diese Memory-Funktion kann auch bei der zweiten elektrischen Maschine vorteilhaft ausgeführt werden, so dass durch entsprechende Entmagnetisierung des Rotors der zweiten Maschine diese im Leerlauf arbeitet oder betreibbar ist.

Der den ersten Rotor koaxial umgebende zweite Rotor der zweiten elektrischen Maschine ist zweckmäßigerweise als Rotorträger mit einer inneren Wicklung und mit einer äußeren Wicklung ausgeführt. Die innere Wicklung ist dabei dem ersten Rotor zugewandt, während die äußere Wicklung dem Stator der zweiten Maschine zugewandt ist. Der Rotorträger selbst kann dann mit der zweiten Welle (Abtriebs- oder Kardanwelle) fest verbunden sein, die ihrerseits an ein Differentialgetriebe des Antriebs eines Kraftfahrzeugs geführt sein kann. Der Rotorträger selbst besteht dabei aus nicht magnetisierbarem oder unmagnetischem Material, z.B. aus Edelstahl.

Wesentlich bei der Ausgestaltung des zweiten Rotors der zweiten elektrischen Maschine ist, dass die innere Wicklung und die äußere Wicklung derart gegenläufig geschaltet sind, dass ein zwischen dem ersten Rotor und der inneren Wicklung auf dem zweiten Rotor erzeugtes Drehfeld gegensinnig ist zu einem zwischen dem zweiten Rotor und dem Stator der zweiten Maschine erzeugten Drehfeld. Die gegenläufige Verschaltung kann beispielsweise dadurch erreicht werden, dass zwei der drei Phasen der Drehstromwicklung der inneren und der äußeren Drehstromwicklung über Kreuz verbunden sind.

Die bevorzugt als Maschinenkaskade aufgebaute zweite elektrische Maschine ist durch eine durch den ersten Rotor und durch die innere Wicklung des zweiten Rotors gebildete innere Teilmaschine sowie durch eine durch die äußere Wicklung des zweiten Rotors und durch den Stator gebildete äußere Teilmaschine hergestellt. Die innere Teilmaschine ist dabei zweckmäßigerweise als permanent erregte Synchronmaschine ausgeführt, während die äußere Teilmaschine als Asynchronmaschine ausgeführt ist. Die zweite Maschine oder Maschinenkaskade kann auch als doppelt gespeiste Asynchronmaschine bezeichnet werden.

Bezüglich des Verfahrens wird die genannte Aufgabe gelöst durch die Merkmale des Anspruchs 21. Zweckmäßige Weiterbildungen sind Gegenstand der auf diesen rückbezogenen Unteransprüche.

So wird bei dem Verfahren zum Betreiben eines elektrischen Getriebes mittels einer Steuer- bzw. Regelvorrichtung der elektrische und/oder mechanische Leistungsfluss zwischen zwei elektrischen Maschinen derart gesteuert, dass bedarfsweise Leistung sowohl vom Rotor einer ersten Maschine als auch vom Stator der zweiten Maschine in diese berührungslos ein- und ausfließen kann.

Das elektrische Getriebe ist dabei bevorzugt in einem Kraft-oder Hybridfahrzeug einsetzbar und weist hierzu eine einer ersten Welle oder Antriebswelle zugeordnete, insbesondere als permanenterregte Synchronmaschine ausgeführte, erste elektrische Maschine und eine einer zweiten Welle oder Abtriebswelle zugeordnete, insbesondere nach Art einer Maschinenkaskade als doppelt gespeiste Asynchronmaschine ausgeführte, zweite elektrische Maschine sowie die mit den beiden elektrischen Maschinen verbundene Steuer- und/oder Regelvorrichtung zur elektrischen Leistungsverzweigung auf.

In zweckmäßiger Ausgestaltung des Verfahrens wird an einer mit der ersten Maschine verbundenen ersten Welle entstehende mechanische Leistung von der zweiten Maschine abgenommen und mit Hilfe der Steuer- bzw. Regelvorrichtung in elektrische und mechanische Leistung umgewandelt.

Des Weiteren kann vorteilhafterweise die von der zweiten Maschine abgenommene elektrische Leistung in einen elektrischen Speicher oder über einen gemeinsamen Zwischenkreis an die erste Maschine geführt werden.

Ferner kann zweckmäßigerweise Bremsenergie oder Bremsleistung oder ein Bremsmoment, die bzw. das über eine mit der zweiten Maschine verbundene zweite Welle aufgenommen wird, über die zweite Maschine an die Steuer- bzw. Regelvorrichtung als speicherbare Rekuperationsenergie abgegeben werden. Somit ermöglicht das erfindungsgemäße elektrische Getriebe ein Einspeisen von während einer Bremsmomentaufnahme oder Rekuperation aufgenommener Energie oder Leistung. Diese Energie wird dabei über die Maschinenkaskade und somit über die zweite elektrische Maschine in den Speicher der Steuer- bzw. Regelvorrichtung geführt. Zusätzlich zur zweiten Maschine kann auch die erste Maschine Bremsenergie aufnehmen und dem Speicher zuführen.

Zudem kann zum Anlassen einer mit der ersten Welle gekoppelten Brennkraftmaschine die erste Maschine über die Steuer- bzw. Regelvorrichtung bei gleichzeitig stromloser zweiter Maschine bestromt werden. Somit kann eine Brennkraftmaschine eines Kraftfahrzeugs allein über die erste Maschine nach Art einer Starterfunktion angelassen werden.

Auch kann vorteilhafterweise ein mit dem elektrischen Getriebe ausgeführtes Kraftfahrzeug lediglich mit der zweiten Maschine elektrisch angefahren und/oder gefahren werden, insbesondere um anschließend mit der ersten Maschine den Verbrennungsmotor zu starten.

Die mit der Erfindung erzielten Vorteile bestehen insbesondere darin, dass durch den Aufbau und die Verwendung einer Maschinenkaskade als zweite elektrische Maschine praktisch verlustlos oder zumindest äußerst verlustarm, insbesondere beim Anfahren eines Kraftfahrzeugs, eine besonders geeignete Leistungsverzweigung einstellbar und der entsprechende Leistungsfluss bedarfsweise steuerbar ist. Der mechanische und/oder elektrische Leistungsfluss kann dabei derart eingestellt oder gesteuert werden, dass auch bei gestarteter Brennkraftmaschine - und damit bei in einer Stand- oder Leerlaufdrehzahl rotierendem Rotor - der ersten elektrischen Maschine auch die erzeugte Wirkleistung über die Steuer- bzw. Regelvorrichtung gespeichert werden kann, wenn abtriebsseitig an der zweiten elektrischen Maschine kein mechanisches Drehmoment, insbesondere zum Anfahren des Kraftfahrzeugs, abgenommen wird.

Für die genannten Betriebsarten sind keinerlei Kupplungen erforderlich. Durch den Einsatz des elektrischen Getriebes können zusätzlich zu einem herkömmlichen Getriebe und einer Anfahrkupplung oder einem Drehmomentwandler mit Automatikgetriebe auch der herkömmliche Anlasser und die Lichtmaschine entfallen. Zudem können zusätzlich zu der Übernahme der Grundfunktionalitäten für ein Getriebe auch die Aufgabe des Starters und des Generators eines Antriebs, insbesondere auch eines Hybridantriebs, eines Kraftfahrzeugs mit übernommen werden.

Ferner ist es möglich, Bremsenergie mittels Rekuperation abzuspeichern sowie ein Kraftfahrzeug rein elektrisch anzufahren bzw. zu fahren. Infolge der optimierten elektrischen Leistungsverzweigung ist insbesondere ein Anfahren eines Kraftfahrzeugs mit hohem Wirkungsgrad ermöglicht.

Nachfolgend werden Ausführungsbeispiele der Erfindung anhand einer Zeichnung näher erläutert. Darin zeigen:

FIG 1    schematisch Funktionskomponenten des erfindungsgemäßen elektrischen Getriebes mit zwei kupplungslos gekoppelten elektrischen Maschinen sowie mit einer elektrischen Steuer- bzw. Regelvorrichtung,

FIG 2    in einem Drehmoment-/Drehzahl-Diagramm eine Kennlinie der in einer ersten Betriebsphase als gegensynchroner Motor arbeitenden Maschinenkaskade,

FIG 3    eine Darstellung des Leistungsflusses in der ersten Betriebsphase,

FIG 4    in einer Darstellung gemäß FIG 2 die als gegensynchroner Motor arbeitende Maschinenkaskade in einer zweiten Betriebsphase,

FIG 5    in einer Darstellung gemäß FIG 3 den Leistungsfluss bei der zweiten Betriebshase,

FIG 6    in einer Darstellung gemäß FIG 2 die Kennlinie der als übersynchroner Motor betriebenen Maschinenkaskade in einer dritten Betriebsphase,

FIG 7    in einer Darstellung gemäß FIG 3 den Leistungsfluss während der dritten Betriebsphase,

FIG 8    in einer Darstellung gemäß FIG 2 die Kennlinie der als übersynchroner Generator betriebenen Maschinenkaskade in einer vierten Betriebsphase, und

FIG 9    in einer Darstellung gemäß FIG 3 den Leistungsfluss während der vierten Betriebsphase.

Einander entsprechende Teile sind in allen Figuren mit den gleichen Bezugszeichen versehen.

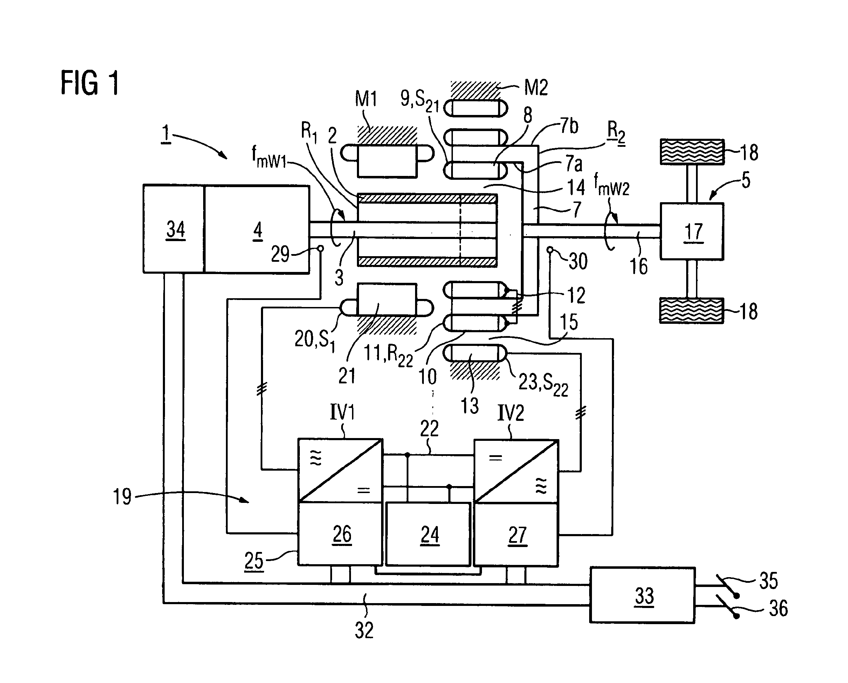

FIG 1 zeigt schematisch das elektrische Getriebe 1 mit einer ersten elektrischen Maschine M1 und mit einer nachfolgend als Maschinenkaskade M2 bezeichneten zweiten elektrischen Maschine M2. Die vorteilhafterweise als permanent erregte Synchronmaschine ausgeführte erste elektrische Maschine M1 weist einen Rotor $R_1$ auf, der außenseitig einen Permanent- oder Dauermagneten 2 trägt.

Der Rotor $R_1$ der ersten Maschine M1 ist in dem dargestellten Ausführungsbeispiel direkt auf einer nachfolgend als Kurbelwelle W1 bezeichneten ersten Welle 3 befestigt. Die Kurbelwelle W1 wiederum ist mit einem Verbrennungsmotor oder einer Brennkraftmaschine 4 eines teilweise dargestellten Kraftfahrzeugs 5 verbunden. Der Rotor $R_1$ der

ersten elektrischen Maschine M1 ragt vorzugsweises in die Maschinenkaskade M2 hinein.

Die Maschinenkaskade M2 ist als so genannte doppelt gespeiste Asynchronmaschine ausgeführt. Hierzu weist die Maschinenkaskade M2 einen den ersten Rotor $R_1$ koaxial umgebenden zweiten Rotor $R_2$ auf. Der zweite Rotor $R_2$ umfasst einen Rotorträger 7 mit einer Trägerinnenseite 7a und einer Trägeraußenseite 7b. An der Trägerinnenseite 7a des Rotorträgers 7 ist ein Wicklungsträger 8 mit einer inneren Wicklung 9 vorgesehen. Auf der Trägeraußenseite 7b des Rotorträgers 7 ist ein weiterer Wicklungsträger 10 mit einer äußeren Wicklung 11 angeordnet.

Die innere Wicklung 9 und die äußere Wicklung 11 des zweiten Rotors $R_2$ sind über eine dreiphasige Wicklungsschaltung 12 gegenläufig verschaltet. Hierdurch werden zwischen der inneren Wicklung 9 und dem Rotor $R_1$ einerseits und zwischen der äußeren Wicklung 11 und einem Stator 13 der Maschinenkaskade M2 andererseits zueinander gegensinnige Drehfelder 14, 15 erzeugt. Mit anderen Worten: Durch die Verschaltung der inneren Wicklung 9 und der äußeren Wicklung 11 des zweiten Rotors $R_2$ wird ein zum inneren, ersten Drehfeld 14 gegensinniges äußeres, zweites Drehfeld 15 erzeugt. Die innere und äußere Drehstromwicklung 9 bzw. 11 des zweiten Rotors $R_2$ sind zur Erzeugung der zueinander gegensinnig verlaufenden Drehfelder 14, 15 beispielsweise durch Tauschen zweier Phasen miteinander verschaltet.

Der Rotorträger 7 - und damit der zweite Rotor $R_2$ - ist über eine nachfolgend als Kardanwelle W2 bezeichnete zweite Welle 16 an ein Differential 17 eines Antriebs des Kraftfahrzeugs 5 geführt. Mit dem Differential 17 sind Antriebsräder 18 des Kraftfahrzeugs 5 gekoppelt.

Dem elektrischen Getriebe 1 ist eine Steuervorrichtung 19 zugeordnet. Die Steuervorrichtung 19 umfasst einen ersten Inverter IV1 in Form eines DC/AC-Wandlers, der wechselstromseitig dreiphasig mit einer auch mit $S_1$ bezeichneten Statorwicklung 20 eines Stators 21 der ersten elektrischen Maschine M1 verbunden ist. Gleichstromseitig ist der erste Inverter IV1 über einen Zwischenkreis 22 mit einem zweiten Inverter IV2 gleichstromseitig verbunden. Der zweite Inverter IV2 ist der Maschinenkaskade M2 zugeordnet und ebenfalls als bidirektionaler DC/AC-Wandler ausgeführt. Wechselstromseitig ist der zweite Inverter IV2 ebenfalls dreiphasig mit der Statorwicklung 23 des Stators 13 der Maschinenkaskade 2 verbunden. Mit dem Zwischenkreis 22 ist ein elektrischer Speicher 24 in Form beispielsweise einer Batterie oder eines Doppelschichtkondensators verbunden.

Die Steuervorrichtung 19 umfasst eine Regeleinrichtung 25 mit einem dem ersten Inverter IV1 verbundenen ersten Regler 26 und mit einem mit dem zweiten Inverter IV2 verbundenen zweiten Regler 27. Mit dem ersten Regler 26 ist ein an die Kurbelwelle W1 geführter Lagegeber oder Sensor 29 verbunden. Analog ist mit dem zweiten Regler 27 ein an die Kardanwelle W2 geführter Sensor oder Drehzahlgeber 30. Die Regler 26, 27 und somit die Reglereinrichtung 25 sind mit einem Daten- oder Informationsbus 32 verbunden. Der Datenbus 32 kann als so genannter CAN-Bus ausgeführt sein. Der Datenbus 32 ist einerseits mit einem Drehmomentkoordinator 33 und andererseits mit einem Regel- oder Steuergerät 34 der Brennkraftmaschine 4 verbunden. Der Drehmomentkoordinator 33 nimmt Stellungsbefehle eines Fahrpedals 35 und eines Bremspedals 36 des Kraftfahrzeugs 5 auf.

Mittels der Regelung oder Regeleinrichtung 19 können die erste Maschine M1 sowie die Maschinenkaskade M2 sowohl in der Betriebsart "Drehstromsteuerung" als auch in der Betriebsart "Drehzahlregelung" betrieben werden.

Bei den nachfolgenden Betrachtungen werden die innere Wicklung 9 mit $S_{21}$, die äußere Wicklung 11 mit $R_{22}$ und die Statorwicklung 23 mit $S_{22}$ bezeichnet.

Nachfolgend wird eine erste Betriebsphase bei stillstehendem Fahrzeug 5 betrachtet. Des Weiteren sei davon ausgegangen, dass die Brennkraftmaschine 4 ausgehend von einer Leerlaufdrehzahl von beispielsweise $600 \text{min}^{-1}$ auf eine Startdrehzahl von $2000 \text{min}^{-1}$ gebracht wird. Zeitgleich wird mittels des zweiten Inverters IV2 ein Drehspannungssystem mit einer speziellen Frequenz und/oder Amplitude derart vorgegeben, dass ein möglichst hoher Strom in der inneren Drehstromwicklung $S_{21}$ des zweiten Rotors $R_2$ der Maschinenkaskade M2 und damit ein entsprechend hoher Strom in der äußeren Drehstromwicklung $R_{22}$ fließen kann. Das dabei entstehende gesamte Drehmoment besteht somit aus einem inneren Anteil $M_{21}$ und einem äußeren Anteil $M_{22}$ der Maschinenkaskade M2. Der innere Anteil $M_{21}$ des Drehmomentes besteht aus der Summe der Drehmomente der Brennkraftmaschine 4 und der ersten Maschine M1.

Bei einem Drehmoment der Brennkraftmaschine 4 von beispielsweise 200Nm, bei einer Drehzahl von $2000 \text{min}^{-1}$, und einem Drehmoment der ersten Maschine M1 von 200Nm, bei einer Drehzahl von $2000 \text{min}^{-1}$ sowie einem Drehmoment der Maschinenkaskade M2 mit einem inneren Anteil $M_{21}$ von 400Nm, bei einer Differenz-Drehzahl $\Delta n = 2000 \text{min}^{-1}$ zwischen den beiden Maschinen M1 und M2, und einem äußeren Anteil $M_{22} = 400\text{Nm}$, entsteht an der Kardanwelle W2 ein resultierendes Drehmoment $M_{W2} = M_{21} + M_{22} = 800\text{Nm}$.

Zwischen der Brennkraftmaschine 4 und der Kardanwelle W2 entspricht dies einer Drehmomentübersetzung von 1:4, was etwa der Getriebeübersetzung im ersten Gang eines Fahrzeugs mit Schaltgetriebe entspricht. Die Maschinenkaskade M2 arbeitet hierbei als so genannter gegensynchroner Motor, da aufgrund der Wicklungsverschaltung 12 zwischen der inneren Wicklung $S_{21}$ und der äußeren Wicklung $R_{22}$ des zweiten Rotors $R_2$ die Frequenz im Stator $S_{22}$ der Maschinenkaskade M2 entgegen der gewünschten mechanischen Drehrichtung der Welle W2 dreht.

Bei Betrachtung eines Koordinatensystems mit Abtragung des Drehmoments M an der Ordinate (Y-Achse) und der Drehzahl oder Drehfrequenz f an der Abszisse (X-Achse) sollen folgende Vereinbarungen gelten:

$$f_{S21} = f_{mW1} - f_{mW2} \qquad (1)$$

$$f_{S22} = - f_{S21}, \qquad (2)$$

wobei $f_{mW1}$ die mechanische Drehfrequenz der Kurbelwelle W1, $f_{mW2}$ die mechanische Drehfrequenz der Kardanwelle W2 und $f_{S21}$ sowie $f_{S22}$ die Drehfrequenz in den Drehstromwicklungen $S_{21}$ bzw. $R_{22}$ sind.

Ist z.B. $f_{mW1} = 33s^{-1}$ und $f_{mW2} = 0$, so ist $f_{S21} = 33s^{-1}$ und $f_{S22} = -33s^{-1}$. Somit ist bei stehender oder nicht rotierender Kardanwelle W2 ($f_{mW2} = 0$) im ersten Augenblick des Anfahrens - und damit in oder während der ersten Betriebsphase - die Frequenz $f_{S21} \approx 33Hz$ in der Wicklung $S_{21}$. Damit ist aufgrund der Verschaltung 12 der inneren und der äußeren Wicklung $S_{21}$ bzw. $R_{22}$ des zweiten Rotors $R_2$ der Maschinenkaskade M2 die Frequenz $f_{R22} = -33$ Hz in der Wicklung $R_{22}$. Da der zweite Rotor $R_2$ - und damit dessen Rotorträger 7 - stillsteht, muss auch die Statorfrequenz $f_{S22} = -33$ Hz betragen.

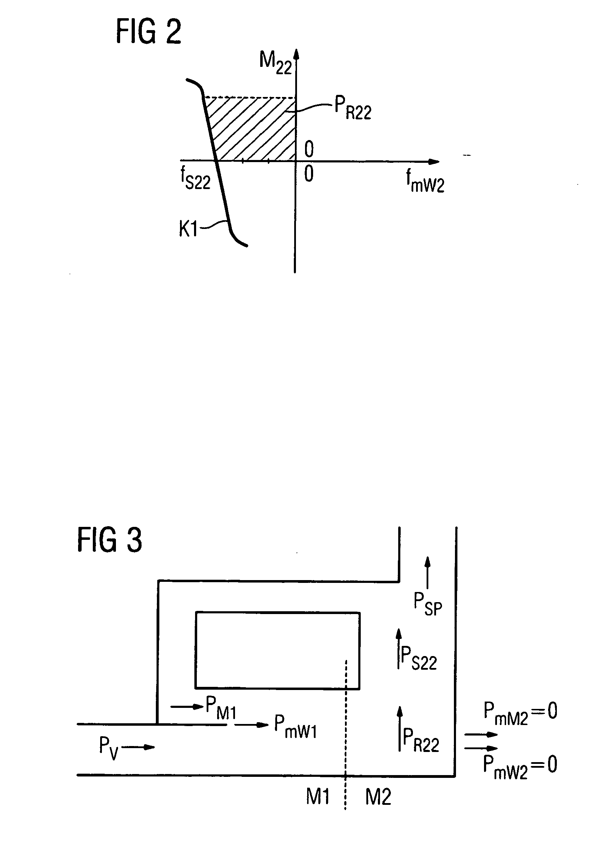

Für die Maschinenkaskade M2 ergibt sich somit die in FIG 2 angegebene Drehmoment-/Drehzahlcharakteristik. Dabei zeigt die FIG 2 die Drehmoment-/Drehzahlkennlinie $K_1$ für den Betrieb der Maschinenkaskade M2 in dieser ersten Betriebsphase als gegensynchronen Motor. Hierfür gilt:

$$P_{mM22} = -P_{S22} - s \cdot (-P_{S22}) \qquad (3),$$

mit

$$S = (f_{S22} - f_{mW2}) \cdot (f_{S22})^{-1}, \ s > 0 \qquad (4)$$

$$P_{mM22} = -P_{S22} + s \cdot P_{S22},$$

mit

$$s \cdot P_{S22} = P_{R22}$$

$$P_{mM22} = -P_{S22} + P_{R22} \qquad (5)$$

Hierbei sind $P_{mM22}$ die mechanische Leistung der Maschinenkaskade M2, $P_{S22}$ die elektrische Statorleistung und $P_{R22}$ die elektrische Rotorleistung der Maschinenkaskade M2.

Da zu Beginn des Anfahrvorgangs während der ersten Betriebsphase keine mechanische Leistung an die Kardanwelle W2 abgegeben wird, wird die gesamte elektrische Leistung aus der inneren Wicklung $S_{21}$ bzw. aus der äußeren Wicklung $R_{22}$ über die Statorwicklung $S_{22}$ der Maschinenkaskade M2 in den Inverter IV2 der Steuervorrichtung 19 eingeleitet.

Für diese erste Betriebsphase des Anfahrvorgangs des Kraftfahrzeugs 5 ergibt sich eine Leistungsverzweigung bzw. ein Leistungsfluss, wie in FIG 3 veranschaulicht. Dabei sind mit $P_V$ die mechanische Leistung der Brennkraftmaschine 4, mit $P_{M1}$ die mechanische Leistung der ersten elektrischen Maschine M1, mit $P_{R22}$ die elektrische Rotorleistung der Maschinenkaskade M2, mit $P_{S22}$ die elektrische Statorleistung der Maschinenkaskade M2 und mit $P_{SP}$ die elektrische Leistung des Speichers 24 bezeichnet.

Erkennbar ist, dass bezüglich des durch die gestrichelte senkrechte Linie gekennzeichneten Übergangs zwischen der ersten Maschine M1 und der Maschinenkaskade M2 ein Teil der elektrischen Rotor- und/oder Statorleistung $P_{R22}$ bzw. $P_{S22}$ als Leistungsrückfluss über die Inverter IV2 und IV1 an die erste Maschine M1 als mechanische Leistung $P_{M1}$ zurückführbar ist und somit zusammen mit der Leistung $P_V$ des Verbrennungsmotors 4 als mechanische Leistung $P_{mW1}$ an der Kurbelwelle W1 zur Verfügung steht. Ein weiterer Teil der elektrischen Rotor- bzw. Statorleistung $P_{R22}$, $P_{S22}$ fließt als elektrische Leistung $P_{SP}$ in den Speicher 24.

Unter Bezugnahme auf das vorhergehende Beispiel ergeben sich somit bei einer Leistung $P_V$ der Brennkraftmaschine 4 mit $P_V \approx 40kW$ und einer Leistung $P_{M1}$ der ersten elektrischen Maschine M1 mit $P_{M1} \approx 40$ kW eine Leistungsübertragung von der ersten Maschine M1 auf die Maschinenkaskade M2 von $P_{R22} \approx 80$ kW. Die in den Speicher 24 übertragene elektrische Leistung $P_{SP}$ beträgt $P_{SP} \approx 40$ kW. Diese Leistung $P_{SP}$ ist abhängig von der Höhe des Anfahrmomentes. Die rückfließende Leistung von der Maschinenkaskade M2 und vom zweiten Inverter IV2 und an die erste Maschine M1 beträgt $P_{S22} = 40$kW. Dies entspricht einer Zirkulation der Leistung. Von ca. 40kW zwischen den beiden Maschinen M1 und M2.

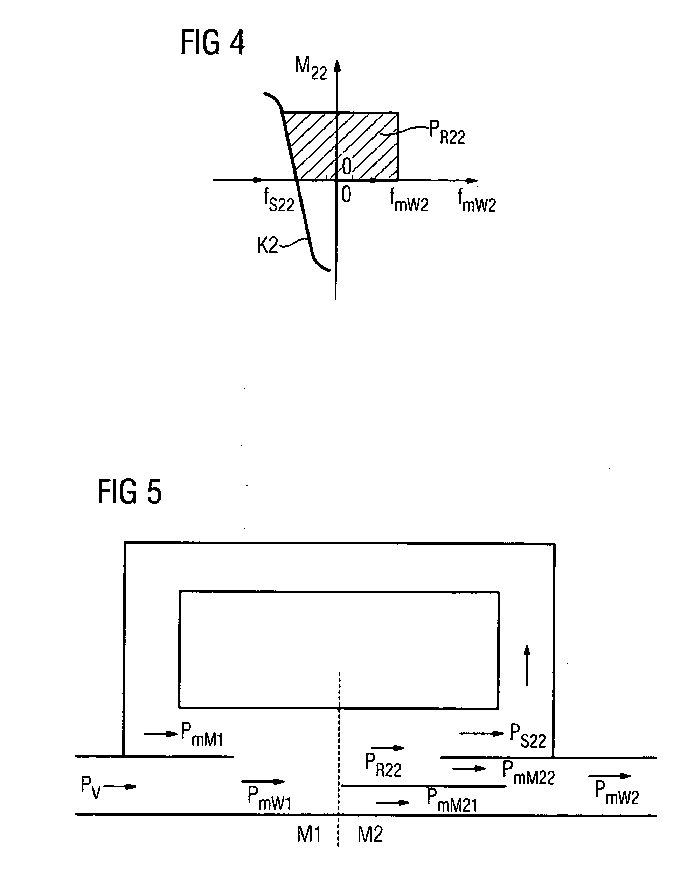

Im Zusammenhang mit den FIG 4 und 5 wird nachfolgend eine zweite Betriebsphase (Phase des Anfahrvorganges) betrachtet. Dabei befindet sich das Fahrzeug in einem unteren Geschwindigkeitsbereich, so dass sich die nachfolgenden Beziehungen bezüglich der Leistungsbilanz ergeben:

$$P_{mW1} \;=\; P_{R22} \;+\; P_{mM21} \qquad\qquad (6)$$

$$P_{mW1} \;=\; P_V \;+\; P_{mM1} \qquad\qquad (7)$$

$$P_{mW2} \;=\; P_{mM21} \;+\; P_{mM22} \qquad\qquad (8)$$

Aus (6) und $M_{W1} \cdot 2\pi f_{mW1} = P_{R22} + M_{W1}\, 2\pi f_{mW2}$ folgt:

$$P_{R22} \;=\; M_{W1}\; 2\pi (f_{mW1} \,-\, f_{mW2})$$

mit

$$M_{W1} \;=\; P_{mW1} \;\cdot\; (2\pi f_{mW1})^{-1}$$

folgt:

$$P_{R22} \;=\; P_{mW1} \;\cdot\; (f_{mW1} - f_{mW2}) \;\cdot\; (f_{mW1})^{-1} \qquad\qquad (9)$$

Dabei sind $P_{mW1}$ die mechanische Leistung an der Kurbelwelle W1, $P_{mM21}$ die mechanische Leistung des ersten Rotors $R_1$ gegenüber dem zweiten Rotor $R_2$ der Maschinenkaskade M2, $P_{mM1}$ die mechanische Leistung der ersten elektrischen Maschine M1, $P_{mW2}$ die mechanische Leistung an der Kardanwelle W2, $P_{mM22}$ die mechanische Leistung des zweiten Rotors $R_2$ gegenüber dem Stator $S_{22}$ der Maschinenkaskade M2 und $M_{W1}$ das Drehmoment der Kurbelwelle W1.

Bei dieser Betrachtung erhöht sich unter dem Einfluss des Drehmomentes an der Kardanwelle W2 die mechanische Drehfrequenz $f_{mW2}$. Hiermit wird sich in der Regel auch die Drehfrequenz $f_{mW1}$ der Kurbelwelle W1 und damit der Brennkraftmaschine 4 erhöhen. Üblicherweise nimmt dann auch das zur Verfügung stehende Drehmoment der Brennkraftmaschine 4 ebenfalls zu.

Geht man in dieser Betriebsphase zunächst davon aus, dass die Differenz der Frequenzen $\pi f = f_{mW1} - f_{mW2}$ annähernd gleich bleibt, und dass ebenfalls aufgrund der höheren mechanischen Leistung $P_{mW1}$ der Kurbelwelle W1 bzw. der Brennkraftmaschine 4 die elektrische Leistung $P_{R22}$ des zweiten Rotors $R_2$ - analog der Gleichung (9) - gleich bleibt, so ergeben sich die Zusammenhänge hinsichtlich der Drehmoment-/Drehzahlkennlinie und des Leistungsflusses bzw. der Leistungsverzweigungen gemäß den FIG 4 bzw. 5.

So zeigt FIG 4 die Drehmoment-/Drehzahlkennlinie K2 für die wiederum als gegensynchroner Motor arbeitende Maschinenkaskade M2 in dieser zweiten Betriebsphase (zweite Anfahrphase).

Die entsprechende Leistungsflussbilanz ist in FIG 5 veranschaulicht. Erkennbar ist, dass im Vergleich zur Leistungsflussbilanz gemäß FIG 3 die aus dem Stator $S_{22}$ der Maschinenkaskade M2 ausgeleitete elektrische Leistung $P_{S22}$ abgenommen hat, während die abgegebene mechanische Leistung $P_{mW2}$ an der Kardanwelle W2 zugenommen hat.

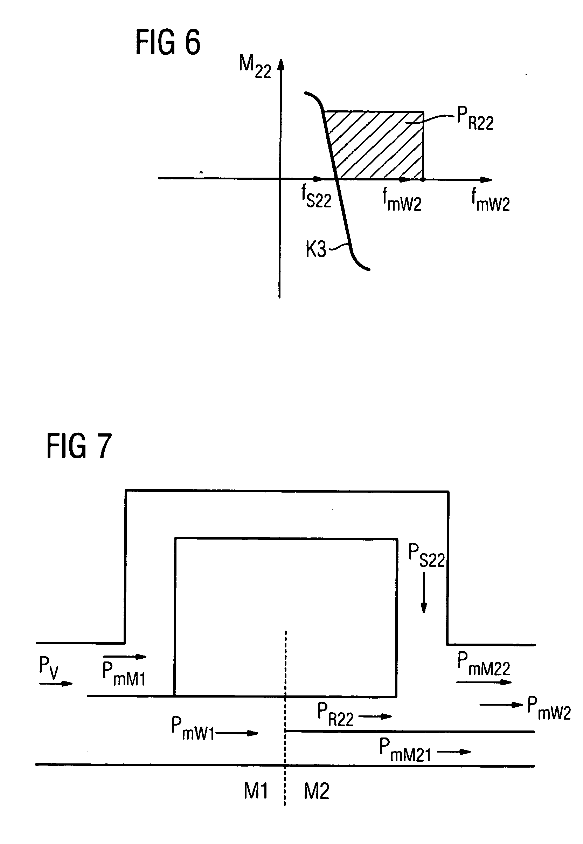

Nachfolgend werden anhand der FIG 6 und 7 die Verhältnisse bei einer eine kontinuierliche Fahrt des Kraftfahrzeuges 5 bei hoher Geschwindigkeit beschreibenden dritten Betriebsphase betrachtet. Bei dieser Betriebsphase geht ab einer bestimmten Geschwindigkeit des Fahrzeugs 5 - und damit bei einer bestimmten Frequenz oder Drehfrequenz $f_{mW2}$ der Kardanwelle W2 - die Maschinenkaskade M2 von der Betriebsart "gegensynchroner Motor" gemäß den Kennlinien K1 und K2 der FIG 2 bzw. 4 in die Betriebsart "übersynchroner Motor" über.

Die entsprechende Drehmoment-/Drehzahlkennlinie K3 ist in FIG 6 veranschaulicht, während FIG 7 die entsprechende Leistungsflussbilanz zeigt. Für diese Betriebsart mit übersynchronem Motor der Maschinenkaskade M2 gilt die nachfolgende Beziehung:

$$P_{mM22} = P_{S22} - s \cdot P_{S22} \qquad (10),$$

mit

$$s < 0, \quad s = (f_{S22} - f_{mW2}) \cdot (f_{S22})^{-1} \qquad (11)$$

$$P_{mM22} = P_{S22} + |s| \cdot P_{S22}, \text{ mit } |s| \cdot P_{S22} = P_{R22}$$

$$P_{mM22} = P_{S22} + P_{R22} \qquad (12)$$

Gemäß der Leistungsflussbilanz nach FIG 7 wird in dieser Betriebsart oder -phase die Maschinenkaskade M2 sowohl rotorseitig als auch statorseitig gespeist, so dass eine beidseitige Leistungsaufnahme der Maschinenkaskade M2 gegeben ist. Die hierzu erforderliche statorseitige Leistung wird von der ersten Maschine M1 geliefert, die im Generatorbetrieb arbeitet. Die hierzu erforderliche Leistung ist von der Brennkraftmaschine 4 zusätzlich bereitzustellen.

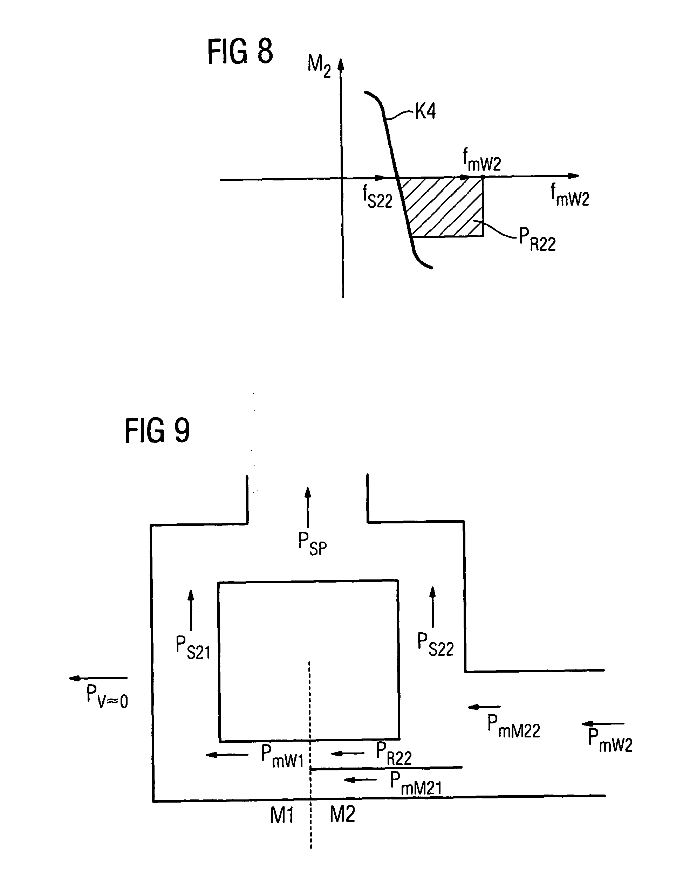

Bei der nachfolgend beschriebenen vierten Betriebsphase soll anhand der FIG 8 und 9 die Energierückgewinnung beim Abbremsen des Kraftfahrzeugs 5 (Rekuperation) beschrieben werden. Wird beispielsweise durch Betätigen des Bremspedals 36 ein Bremsvorgang eingeleitet, so wird in der Regel das Drehmoment der Brennkraftmaschine 4 auf null gesetzt. Die Drehzahl der Verbrennungsmotors 4 wird deshalb kleiner werden und kann unterstützend durch die erste Maschine M1, z.B. auf die Leerlaufdrehzahl oder die Drehzahl null, gebracht werden. Hierbei gilt $f_{mW1} < f_{mW2}$.

Mittels der Steuervorrichtung 19 werden über den zweiten Inverter IV2 die Frequenz und die Spannung der Maschinenkaskade M2 derart nachgeführt, dass die Maschinenkaskade M2 in der Betriebsart "übersynchroner Generator" arbeitet. Die entsprechende Drehmoment-/Drehzahlkennlinie K4 ist in FIG 8 veranschaulicht. Entsprechend des gewünschten Bremsmomentes wird dann von der Steuervorrichtung 19 ein entsprechender Strom in der Maschinenkaskade M2 vorgegeben.

In dieser Betriebsart bzw. während dieser vierten Betriebsphase nimmt die Maschinenkaskade M2 mechanische Leistung von der Kardanwelle W2 als Bremsleistung auf und gibt einen Teil der Leistung als elektrische Rotorleistung $P_{R22}$ über den zweiten Rotor $R_2$ bzw. über den Stator $S_{21}$ an den Rotor $R_1$ der ersten Maschine M1 als mechanische Leistung ab. Die restliche Leistung gelangt über die Statorwicklung $S_{22}$ und über den zweiten Inverter IV2 in den Speicher 24. Dies entspricht einer Energierückgewinnung aus der Bremsenergie. Die vom ersten Rotor $R_1$ aufgenommene mechanische Enerdie oder Leistung wird über den Stator $S_{21}$ und den Inverter IV1 ebenfalls dem Speicher 24 zugeführt.

Für den Betrieb der Maschinenkaskade M2 als übersynchroner Generator gelten folgende Beziehungen:

$$-P_{mW1} = -P_{R22} - P_{mM21}$$

$$P_{R22} = (f_{mW2} - f_{mW1})(f_{mW2})^{-1} \cdot P_{mW2}$$

$$-P_{mM22} = -P_{S22} - s \cdot (-P_{S22}),$$

8

mit

$$s < 0, \quad s = (f_{S22} - f_{mW2}) \cdot (f_{S22})^{-1}$$

$$\begin{aligned} -P_{mM22} &= -P_{S22} + s \cdot P_{S22} \\ &= -P_{S22} - |s| \cdot P_{S22} \\ &= -P_{S22} - P_{R22} \end{aligned}$$

Die gesamte Bremsleistung beträgt somit:

$$-P_{mW2} = -P_{mM21} - P_{mM22}$$

Der in die erste Maschine M1 gelangende Leistungsanteil würde den Rotor $R_1$ beschleunigen. Allerdings wird die Drehzahl des Rotors $R_1$ durch die Drehzahlregelung der ersten Maschine M1 mittels der Steuer- und Regelvorrichtung 19 bzw. 25 gehalten bzw. abgebremst. Diese Bremsleistung wird ebenfalls dem Speicher 24 zugeführt, woraus wiederum eine Energierückgewinnung resultiert. Die entsprechende Leistungsflussbilanz bei dieser Rekuperation ist in FIG 9 veranschaulicht.

Mit diesem elektrischen Getriebe 1 sowie mit dem entsprechenden Verfahren zu dessen Steuerung mittels der Steuer- und Regeleinrichtung 19 bzw. 25 wird erreicht, dass je nach Bedarf Leistung sowohl vom Rotor $R_1$ der ersten Maschine M1 als auch vom Stator $S_{22}$ der Maschinenkaskade M2 in die Maschinenkaskade M2 berührungslos ein- oder ausfließen kann. Mittels des erfindungsgemäßen Aufbaus der Maschinenkaskade M2 und damit mittels der zweiten elektrischen Maschine M2 des elektrischen Getriebes 1 ist es zudem möglich, ein Kraftfahrzeug 5 ausschließlich elektrisch zu fahren bzw. anzufahren. Hierbei kann das Anfahren oder Fahren des Kraftfahrzeugs insbesondere ohne zusätzliche Trennkupplung am Verbrennungsmotor bzw. an der Brennkraftmaschine 4 erfolgen.

Um beispielsweise das rein elektrische Anfahren des Kraftfahrzeugs 5 über die Maschinenkaskade M2 und ein unabhängiges Starten der Brennkraftmaschine 4 mit der ersten elektrischen Maschine M1 zu ermöglichen, sollte zweckmäßigerweise zumindest derjenige Rotoranteil des ersten Rotors $R_1$, der in die Maschinenkaskade M2 hineinkragt, als einen Läufer einer so genannten Memory-Maschine aufgebaut werden. Hierbei wird anstelle eines Magnetmaterials mit ausgeprägter Hysterese (z.B. seltene Erdmagnete) ein Magnetmaterial mit sehr schwach ausgeprägter Hysterese (z.B. AlNiCo) verwendet. Hierdurch ist es möglich, diesen Rotorteil des Rotors $R_1$, der in die Maschinenkaskade M2 hineinragt, über die Statorwicklung $S_{22}$ gezielt, insbesondere im Bereich von einigen Millisekunden, auf- bzw. abzumagnetisieren.

Wird z.B. ein rein elektrischer Anfahrvorgang gewünscht, so wird mittels der Regelung 25 und insbesondere des Reglers 27 der Maschinenkaskade M2 ein Abmagnetisierungsvorgang des entsprechenden Rotorteils des Rotors $R_1$ mit einem kurzzeitigen, relativ hohen Stromimpuls über die Wicklungen $S_{21}$ bzw. $R_{22}$ eingeleitet, wodurch die elektromagnetische Kopplung zwischen dem ersten Rotor $R_1$ und dem zweiten Rotor $R_2$ aufgehoben ist.

Anschließend kann dann rein elektrisch angefahren werden. Hierbei sollte jedoch ein bestimmter Strom nicht überschritten werden, da ansonsten die Auf- und Abmagnetisierung spürbar wäre, was mit einer Drehmomentpulsaktion bei stillstehendem Rotor $R_1$ und sich drehender Kurbelwelle W2 verbunden wäre. Das Fahrzeug oder Kraftfahrzeug kann dann über die zweite Maschine M2 mit der untersynchronen Betriebsart einer Asynchronmaschine rein elektrisch angefahren bzw. gefahren werden

Während des elektrischen Fahrens kann dann auch mittels der ersten elektrischen Maschine M1 der Verbrennungsmotor bzw. die Brennkraftmaschine 4 gestartet werden.

Soll nun das elektrische Getriebe 1 für den weiteren Fahrvorgang aktiviert werden, so ist mit einem relativ hohen, kurzzeitigen Stromimpuls über die Regelung 25 bzw. 27 der Maschinenkaskade M2 der entsprechende Rotorteil des Rotors $R_1$ über die Wicklungen $S_{21}$ bzw. $R_{22}$ des zweiten Rotors $R_2$ aufzumagnetisieren. Dadurch ist die Verkoppelung bezüglich der Energieübertragung zwischen dem Rotor $R_1$ und der Maschinenkaskade $M_2$ wieder hergestellt.

In vorteilhafter Weise kann auch der gesamte Rotor $R_1$ als Läufer einer Memory-Maschine aufgebaut werden. Hierdurch sind die entsprechenden Wirkungsweisen und Vorteile auch bei der ersten Maschine M1 realisiert. Die Auf- und Abmagnetisierungsvorgänge für den entsprechenden Rotorteil des Rotors $R_1$ der ersten elektrischen Maschine M1 erfolgt dann über deren Statorwicklung $S_1$ bzw. 20.

**Patentansprüche**

1.  Elektrisches Getriebe (1), insbesondere für ein Kraft- oder Hybridfahrzeug (5), mit einer, insbesondere als permanenterregte Synchronmaschine ausgeführten, ersten elektrischen Maschine (M1) und mit einer, insbesondere nach Art einer Maschinenkaskade als doppelt gespeisten Asynchronmaschine ausgeführten, zweiten elektrischen Maschine (M2), die einen ersten Rotor ($R_1$) und einen mit einer (zweiten) Welle (16, W2) verbindbaren zweiten Rotor ($R_2$) aufweist, **dadurch gekennzeichnet,**

    - **dass** die erste elektrische Maschine (M1) einen Stator (20, $S_1$) und einen über eine (erste) Welle (3, W1) mit einer Brennkraftmaschine (4) verbindbaren und von dieser antreibbaren Rotor ($R_1$) aufweist,
    - **dass** der zweite Rotor ($R_2$) der zweiten elektrischen Maschine (M2) deren ersten Rotor ($R_1$) koaxial umgibt, wobei der zweite Rotor ($R_2$) zur Erzeugung eines ersten Drehfeldes (14) eine dem ersten Rotor ($R_1$) zugewandte innere Wicklung (9, $S_{21}$) und eine einem Stator (13, $S_{22}$) zugewandte äußere Wicklung (11, $R_{22}$) aufweist, die mit der inneren Wicklung (9, $S_{21}$) zur Erzeugung eines zum ersten Drehfeld (14) gegensinnigen zweiten Drehfeldes (15) verschaltet ist, und
    - **dass** eine Steuer- und/oder Regelvorrichtung (19, 25), zur Steuerung der beiden elektrischen Maschinen (M1, M2) ausgestaltet ist.

2.  Elektrisches Getriebe (1) nach Anspruch 1, wobei die Steuervorrichtung (19) einen mit der ersten Maschine (M1) verbundenen ersten Inverter (IV1) und einen mit der zweiten Maschine (M2) verbundenen zweiten Inverter (IV2) aufweist.

3.  Elektrisches Getriebe (1) nach Anspruch 2, wobei der erste Inverter (IV1) wechselstromseitig mit dem Stator (21) der ersten Maschine (M1) verbunden ist.

4.  Elektrisches Getriebe (1) nach Anspruch 2 oder 3, wobei der zweite Inverter (IV2) mit dem Stator (13) der zweiten Maschine (M2) verbunden ist.

5.  Elektrisches Getriebe (1) nach einem der Ansprüche 2 bis 4, wobei die beiden Inverter (IV1, IV2) gleichstromseitig unter Bildung eines gemeinsamen Zwischenkreises (22) miteinander verbunden sind.

6.  Elektrisches Getriebe (1) nach Anspruch 5, wobei der gemeinsame Zwischenkreis (22) mit einem elektrischen Speicher (24) verbunden ist.

7.  Elektrisches Getriebe (1) nach einem der Ansprüche 1 bis 6, wobei der Steuervorrichtung (19) eine Regeleinrichtung (25) zur Drehmomentsteuerung und zur Drehzahlregelung der ersten Maschine (M1) und/oder der zweiten Maschine (M2) zugeordnet ist.

8.  Elektrisches Getriebe (1) nach Anspruch 7, wobei dem ersten Inverter (IV1) ein erster Regler (26) und dem zweiten Inverter (IV2) ein zweiter Regler (27) zugeordnet ist.

9.  Elektrisches Getriebe (1) nach Anspruch 7, wobei der erste Regler (26) mit einem an die erste Welle (3) geführten ersten Sensor oder Lagegeber (29) verbunden ist.

10. Elektrisches Getriebe (1) nach Anspruch 7 oder 8, wobei der zweite Regler (27) mit einem an die zweite Welle (16) geführten zweiten Sensor oder Drehzahlgeber (30) verbunden ist.

11. Elektrisches Getriebe (1) nach einem der Ansprüche 7 bis 10, wobei die Regeleinrichtung (25) über einen Datenbus (32) mit einem Drehmomentkoordinator (33) und/oder gegebenenfalls mit einem Regel- oder Steuergerät (34) der Brennkraftmaschine (4) verbunden ist.

12. Elektrisches Getriebe (1) nach einem der Ansprüche 1 bis 11, wobei der Rotor ($R_1$) der ersten Maschine (M1) unter Bildung des ersten Rotors ($R_1$) der zweiten Maschine (M1) in diese hinein ragt.

13. Elektrisches Getriebe (1) nach einem der Ansprüche 1 bis 12, wobei der Rotor ($R_1$) der ersten Maschine (M1) einen Permanentmagneten (2) trägt.

14. Elektrisches Getriebe (1) nach einem der Ansprüche 1 bis 13, wobei der Rotor ($R_1$) der ersten Maschine (M1) mit einer Antriebs- oder Kurbelwelle (3, W1) der Brennkraftmaschine (4) verbunden ist.

15. Elektrisches Getriebe (1) nach einem der Ansprüche 1 bis 14, wobei der zweite Rotor ($R_2$) einen eine Innenseite (7a) und eine Außenseite (7b) aufweisenden Rotorträger (7) aufweist, der innenseitig die innere Wicklung (9, $S_{21}$) und außenseitig die äußere Wicklung (11, $R_{22}$) trägt.

16. Elektrisches Getriebe (1) nach Anspruch 14, wobei der zweite Rotor ($R_2$) der zweiten Maschine (M2) mit einer Abtriebs- oder Kurbelwelle (W2) des Kraftfahrzeugs (4) verbunden ist.

17. Elektrisches Getriebe (1) nach einem der Ansprüche 1 bis 16, wobei die erste Maschine (M1) als permanenterregte Synchronmaschine ausgeführt ist.

18. Elektrisches Getriebe (1) nach einem der Ansprüche 1 bis 17, bei dem die zweite Maschine (M2) nach Art einer Maschinenkaskade ausgeführt ist, wobei eine durch den ersten Rotor ($R_1$) und die innere Wicklung (9, $S_{21}$) des zweiten Rotors ($R_2$) gebildete innere Teilmaschine ($R_1$, $S_{22}$) als Synchron- oder Asynchronmaschine ausgeführt ist, und wobei eine durch die äußere Wicklung (11, $R_{22}$) des zweiten Rotors ($R_2$) und den Stator (13, $S_{22}$) gebildete äußere Teilmaschine ($R_{22}$, $S_{22}$) als Asynchronmaschine ausgeführt ist.

19. Elektrisches Getriebe (1) nach Anspruch 18, wobei die innere Teilmaschine ($R_1$, $S_{21}$) als permanenterregte Synchronmaschine ausgeführt ist.

20. Elektrisches Getriebe (1) nach einem der Ansprüche 1 bis 18, wobei die zweite Maschine (M2) als doppelt gespeiste Asynchronmaschine ausgeführt ist.

21. Verfahren zum Betreiben eines elektrischen Getriebes (1), insbesondere für ein Kraft- oder Hybridfahrzeug (5), **gekennzeichnet durch** folgende Schritte:

   - bereitstellen einer ersten, insbesondere als permanenterregte Synchronmaschine ausgeführten, elektrischen Maschine (M1), die einen Stator (20, $S_1$) und einen über eine erste Welle (3, W1) mit einer Brennkraftmaschine (4) verbindbaren und von dieser antreibbaren Rotor ($R_1$) aufweist,
   - bereitstellen einer zweiten, insbesondere nach Art einer Maschinenkaskade als doppelt gespeisten Asynchronmaschine ausgeführten, elektrischen Maschine (M2), die einen ersten Rotor ($R_1$) und einen mit einer zweiten Welle (16, W2) verbindbaren zweiten Rotor ($R_2$) aufweist, wobei der zweite Rotor ($R_2$), der den ersten Rotor ($R_1$) koaxial umgibt, zur Erzeugung eines ersten Drehfeldes (14) eine dem ersten Rotor ($R_1$) zugewandte innere Wicklung (9, $S_{21}$) und eine einem Stator (13, $S_{22}$) zugewandte äußere Wicklung (11, $R_{22}$) aufweist, die mit der inneren Wicklung (9, $S_{21}$) zur Erzeugung eines zum ersten Drehfeld (14) gegensinnigen zweiten Drehfeldes (15) verschaltet ist, und
   - steuern der beiden elektrischen Maschinen (M1, M2) **durch** eine Steuer- und/oder Regelvorrichtung (19, 25), derart, dass bedarfsweise Leistung (P) sowohl vom Rotor ($R_1$) der ersten Maschine (M1) als auch vom Stator (23, $S_{22}$) der zweiten Maschine (M2) in diese berührungslos ein- und ausfließt.

22. Verfahren nach Anspruch 21, bei dem mittels der Steuer- bzw. Regelvorrichtung (19, 25) eine elektrische Leistungsverteilung, insbesondere für ein Kraft- oder Hybridfahrzeug (5), gesteuert wird.

23. Verfahren nach Anspruch 21 oder 22, bei dem an der ersten Welle (3) entstehende mechanische Leistung von der zweiten Maschine (M2) abgenommen und von dieser über die Steuer- bzw. Regelvorrichtung (19, 25) zumindest teilweise als elektrische Leistung an einen der zweiten Maschine (M2) zugeordneten Inverter (IV2) sowie als mechanische Leistung an die zweite Welle (16) abgegeben wird.

24. Verfahren nach einem der Ansprüche 21 bis 23, bei dem die von der zweiten Maschine (M2) abgenommene elektrische Leistung in einen elektrischen Speicher (24) oder an die erste Maschine (M1) geführt wird.

25. Verfahren nach einem der Ansprüche 21 bis 24, bei dem eine über die zweite Welle (16) von der zweiten Maschine (M2) aufgenommene Bremsleistung oder Bremsenergie über die zweite Maschine (M2) an die Steuer- bzw. Regelvorrichtung (19, 25), insbesondere an einen der zweiten Maschine (M2) zugeordneten Inverter (IV2) als speicherbare Rekuperationsenergie abgegeben wird.

26. Verfahren nach einem der Ansprüche 21 bis 25, bei dem eine über die zweite Welle (16) von der zweiten Maschine (M2) aufgenommene Bremsleistung oder Bremsenergie über die zweite Maschine (M2) an die erste Maschine (M1) weitergegeben und/oder an einen dieser zugeordneten Inverter (IV1) als speicherbare Rekuperationsenergie abgegeben wird.

27. Verfahren nach einem der Ansprüche 21 bis 26, bei dem zum Anlassen einer mit der ersten Welle (3) gekoppelten Brennkraftmaschine (4) die erste Maschine (M1) über die Steuer- bzw. Regelvorrichtung (19, 25) bei gleichzeitig stromloser zweiter Maschine (M2) bestromt wird.

28. Verfahren nach einem der Ansprüche 21 bis 27, bei dem ein mittels des elektrischen Getriebes (1) angetriebenes Kraft- oder Hybridfahrzeug (4) lediglich mit der zweiten Maschine (M2) angefahren und/oder gefahren wird.

**Claims**

1. Electric transmission (1), especially for a motor vehicle or a hybrid vehicle (5), with a first electrical machine (M1), especially designed as a permanently-excited asynchronous machine, and with a second electrical machine (M2) especially designed in the form of a machine cascade as a double-fed asynchronous machine, which features a first rotor ($R_1$) and a second rotor ($R_2$) connectable to a (second) shaft (16, W2), **characterised in that**

   - the first electric machine (M1) features a stator (20, $S_1$) and a rotor ($R_1$) able to be connected via a (first) shaft (3, W1) to an internal combustion engine (4) and able to be driven by said shaft,
   - the second rotor ($R_2$) of the second electrical machine (M2) encloses its first rotor ($R_1$) coaxially, with the second rotor ($R_2$), for creating a first rotary field (14), having an inner winding (9, $S_{21}$) facing the first rotor ($R_1$) and an outer winding (11, $R_{22}$) facing a stator (13, $S_{22}$), which is connected to the inner winding (9, $S_{21}$) for creating a second rotary field (15) in the opposite direction to the first rotary field (14), and
   - an open-loop and or closed loop controller (19, 25), is designed to control the two electrical machines (M1, M2) .

2. Electric transmission (1) according to claim 1, with the controller (19) featuring a first inverter (IV1) connected to the first machine (M1) and a second inverter (IV2) connected to the second machine (M2).

3. Electric transmission (1) according to claim 2, with the first inverter (IV1) being connected on the alternating current side to the stator (21) of the first machine (M1).

4. Electric transmission (1) according to claim 2 or 3, with the second inverter (IV2) being connected to the stator (13) of the second machine (M2).

5. Electric transmission (1) according to one of the claims 2 to 4, with the two inverters (IV1, IV2) being connected to each other on the direct current side while forming a common intermediate circuit (22).

6. Electric transmission (1) according to claim 5, with the common intermediate circuit (22) being connected to an electrical accumulator (24).

7. Electric transmission (1) according to one of the claims 1 to 6, with the controller (19) being assigned a control device (25) for torque control and for speed regulation of the first machine (M1) and/or of the second machine (M2).

8. Electric transmission (1) according to claim 7, with the first inverter (IV1) being assigned a first closed-loop control (26) and the second inverter (IV2) a second closed-loop control (27).

9. Electric transmission (1) according to claim 7, with the first closed-loop control (26) being connected to a first sensor or position transducer (29) guided on the first shaft (3).

10. Electric transmission (1) according to claim 7 or 8, with the second closed-loop control (27) being connected to a second sensor or tachogenerator (30) guided on the second shaft (16).

11. Electric transmission (1) according to one of the claims 7 to 10, with the closed-loop control (25) being connected via a data bus (32) to a torque coordinator (33) and/or where necessary to a closed-loop or open-loop controller (34) of the internal combustion engine (4).

**EP 1 746 714 B1**

12. Electric transmission (1) according to one of the claims 1 to 11, with the rotor ($R_1$) of the first machine (M1) forming the first rotor ($R_1$) of the second machine (M1) and projecting into the latter.

13. Electric transmission (1) according to one of the claims 1 to 12, with the rotor ($R_1$) of the first machine (M1) carrying a permanent magnet (2).

14. Electric transmission (1) according to one of the claims 1 to 13, with the rotor ($R_1$) of the first machine (M1) being connected to a drive shaft or crankshaft (3, W1) of the internal combustion engine (4).

15. Electric transmission (1) according to one of the claims 1 to 14, with the second rotor ($R_2$) having a rotor carrier (7) featuring an inner side (7a) and an outer side (7b), of which the inner side carries the inner winding (9, $S_{21}$) and the outer side the outer winding (11, $R_{22}$).

16. Electric transmission (1) according to claim 14, with the second rotor ($R_2$) of the second machine (M2) being connected to an output drive shaft or crankshaft (W2) of the motor vehicle (4).

17. Electric transmission (1) according to one of the claims 1 to 16, with the first machine (M1) being embodied as a permanently-excited asynchronous machine.

18. Electric transmission (1) according to one of claims 1 to 17, in which the second machine (M2) is embodied in the form of a machine cascade, with an inner submachine ($R_1$, $S_{22}$) formed by the first rotor ($R_1$) and the inner winding (9, $S_{21}$) of the second rotor ($R_2$) is embodied as a synchronous or asynchronous machine and with an outer sub-machine ($R_{22}$, $S_{22}$) formed by the outer winding (11, $R_{22}$) of the second rotor ($R_2$) and the stator (13, $S_{22}$) being embodied as an asynchronous machine.

19. Electric transmission (1) according to claim 18, with the inner submachine ($R_1$, $S_{21}$) being embodied as a permanently-excited asynchronous machine.

20. Electric transmission (1) according to one of the claims 1 to 18, with the second machine (M2) being embodied as a double-fed asynchronous machine.

21. A method for operating an electric transmission (1), especially for a motor vehicle or hybrid vehicle (5), **characterized by** the following steps:

- Provision of a first electrical machine (M1), especially embodied as a permanently-excited asynchronous machine which has a stator (20, $S_1$) and a rotor ($R_1$) able to be connected via a first shaft (3, W1) to an internal combustion engine (4) and able to be driven by said engine,
- Provision of a second electrical machine (M2), especially embodied in the form of a machine cascade as a double-fed asynchronous machine, having a first rotor ($R_1$) and a second rotor ($R_2$) able to be connected to a second shaft (16, W2), with the second rotor ($R_2$), which encloses the first rotor ($R_1$) coaxially, for creation of a first rotary field (14) featuring an inner winding (9, $S_{21}$) facing the first rotor ($R_1$) and outer winding (11, $R_{22}$) facing a stator (13, $S_{22}$) , which is connected to the inner winding (9, $S_{21}$) for creating a second rotary field (15) in the opposite direction to the first rotary field (14) and
- control of the two electrical machines (M1, M2) by an open-loop and closed-loop controller (19, 25), such that, if required, power (P) both from the rotor ($R_1$) of the first machine (M1) as also from the stator $S_{22}$) of the second machine (M2) flows into and out of this in a non-contact manner.

22. Method according to claim 21, in which an electrical power distribution, especially for a motor vehicle or hybrid vehicle (5), is controlled by means of the open-loop or closed-loop controller (19, 25).

23. Method according to claim 21 or 22, in which mechanical power produced by the first shaft (3) is taken up by the second machine (M2) and output by this machine via the open-loop and closed-loop controller (19, 25) at least partly as electrical power to an inverter (IV2) assigned to the second machine (M2) as well as being output as mechanical power to the second shaft (16).

24. Method according to one of claims 21 to 23, in which electrical power taken from the second machine (M2) is fed into an electrical accumulator (24) or to the first machine (M1).

13

**25.** Method according to one of the claims 21 to 24, in which a braking power or braking energy received via the second shaft (16) of the second machine (M2) is output via the second machine (M2) to the open-loop or closed-loop controller (19, 25), especially to an inverter (IV2) assigned to the second machine (M2) as storable recuperation energy.

**26.** Method according to one of claims 21 to 25, with a braking power or braking energy received via the second shaft (16) of the second machine (M2) being passed on via the second machine (M2) to the first machine (M1) and/or output to an inverter (IV1) assigned to this machine as storable recuperation energy.

**27.** Method according to one of the claims 21 to 26, in which, for starting an internal combustion engine (4) coupled to the first shaft (3), the first machine (M1) is supplied with current via the open-loop or closed-loop controller (19, 25), with the second machine (M2) simultaneously not having any current supplied to it.

**28.** The method according to one of the claims 21 to 27, in which a motor vehicle or hybrid vehicle (4) driven by means of the electric transmission (1) is only started and/or driven with the second machine (M2).

**Revendications**

**1.** Transmission électrique (1), en particulier pour un véhicule automobile ou hybride (5) comprenant une première machine électrique (M1) réalisée sus la forme d'une machine synchrone à excitation permanente, et une deuxième machine électrique (M2) réalisée en particulier à la façon d'une cascade de machines sous la forme d'une machine asynchrone à double alimentation, qui présente un premier rotor ($R_1$) et un deuxième rotor ($R_2$) pouvant être relié à un (deuxième) arbre (16, W2), **caractérisée**

- **en ce que** la première machine électrique (M1) présente un stator (20, $S_1$) et un rotor ($R_1$) pouvant être relié à un moteur à combustion interne (4) par l'intermédiaire d'un (premier) arbre (3, W1) et être entraîné par ce moteur,

-- en ce que le deuxième rotor ($R_2$) de la deuxième machine électrique (M2) entoure coaxialement le premier rotor ($R_1$) de celle-ci, le deuxième rotor ($R_2$) présentant, pour la production d'un premier champ tournant (14), un enroulement intérieur (9, $S_{21}$) dirigé vers le premier rotor ($R_1$) et un enroulement extérieur (11, $R_{22}$) dirigé vers un stator (13, $S_{22}$) et qui est connecté à l'enroulement intérieur (9, $S_{21}$) pour la production d'un deuxième champ tournant (15) de sens inverse de celui du premier champ tournant (14), et

- **en ce qu'**un dispositif de commande et/ou de régulation (19, 25) est configuré pour la commande des deux machines électriques (M1, M2).

**2.** Transmission électrique (1) selon la revendication 1, dans laquelle le dispositif de commande (19) présente un premier onduleur (IV1) relié à la première machine (M1) et un deuxième onduleur (IV2) relié à la deuxième machine (M2).

**3.** Transmission électrique (1) selon la revendication 2, dans laquelle, sur son côté courant alternatif, le premier onduleur (IV1) est relié au stator (21) de la première machine (M1) .

**4.** Transmission électrique (1) selon la revendication 2 ou 3, dans laquelle le deuxième onduleur (IV2) est relié au stator (13) de la deuxième machine (M2).

**5.** Transmission électrique (1) selon une des revendications 2 à 4, dans laquelle les deux onduleurs (IV1, IV2) sont reliés l'un à l'autre sur le côté courant continu, avec formation d'un circuit intermédiaire commun (22).

**6.** Transmission électrique (1) selon la revendication 5., dans laquelle le circuit intermédiaire commun (22) est relié à un accumulateur électrique (24).

**7.** Transmission électrique (1) selon une des revendications 1 à 6, dans laquelle, au dispositif de commande (19), est associé un dispositif de régulation (25) destiné à la commande du couple et à la régulation de la vitesse de rotation de la première machine (M1) et/ou de la deuxième machine (M2).

8. Transmission électrique (1) selon la revendication 7, dans laquelle un premier régulateur (26) est associé au premier onduleur (IV1) et un deuxième régulateur (27) est associé au deuxième onduleur (IV2).

9. Transmission électrique (1) selon la revendication 7, dans laquelle le premier régulateur (26) est relié à un premier capteur ou émetteur de position (29) monté au niveau du premier arbre (3).

10. Transmission électrique (1) selon la revendication 7 ou 8, dans laquelle le deuxième régulateur (27) est relié à un deuxième capteur ou émetteur de vitesse de rotation (30) placé au niveau du deuxième arbre (16).

11. Transmission électrique (1) selon une des revendications 7 à 10, dans laquelle le dispositif de régulation (25) est relié à un coordinateur de couple (33) et/ou éventuellement à un appareil de régulation ou de commande (34) du moteur à combustion interne (4) par l'intermédiaire d'un bus de données (32).

12. Transmission électrique (1) selon une des revendications 1 à 11, dans laquelle le rotor ($R_1$) de la première machine (M1) est engagé à l'intérieur de la deuxième machine (M2) en formant le premier rotor ($R_1$) de cette machine.

13. Transmission électrique (1) selon une des revendications 1 à 12, dans laquelle le rotor ($R_1$) de la première machine (M1) porte un aimant permanent (2).

14. Transmission électrique (1) selon une des revendications 1 à 13, dans laquelle le rotor ($R_1$) de la première machine (M1) est relié à un arbre d'entraînement ou à un vilebrequin (3, W1) du moteur à combustion interne (4).

15. Transmission électrique (1) selon une des revendications 1 à 14, dans laquelle le deuxième rotor ($R_2$) présente un support de rotor (7) qui présente lui-même un côté intérieur (7a) et un côté extérieur (7b) et qui porte l'enroulement intérieur (9, $S_{21}$) sur le côté intérieur et l'enroulement extérieur (11, $R_{22}$) sur le côté extérieur.

16. Transmission électrique (1) selon la revendication 14, dans laquelle le deuxième rotor ($R_2$) de la deuxième machine (M2) est relié à un arbre de sortie ou vilebrequin (W2) du véhicule automobile (4).

17. Transmission électrique (1) selon une des revendications 1 à 16, dans laquelle la première machine (M1) est réalisée sous la forme d'une machine synchrone à excitation permanente.

18. Transmission électrique (1) selon une des revendications 1 à 17, dans laquelle la deuxième machine (M2) est réalisée à la façon d'une cascade de machines, dans laquelle une machine partielle intérieure ($R_1. S_{22}$) formée du premier rotor ($R_1$) et de l'enroulement intérieur (9, $S_{21}$) du deuxième rotor ($R_2$) est réalisée sous la forme d'une machine synchrone ou asynchrone, et dans laquelle une machine partielle extérieure ($R_{22}, S_{22}$), formée de l'enroulement extérieur (11, $R_{22}$) du deuxième rotor ($R_2$) et du stator (13, $S_{22}$), est réalisée sous la forme d'une machine asynchrone.

19. Transmission électrique (1) selon la revendication 18, dans laquelle la machine partielle intérieure ($R_1, S_{21}$) est réalisée sous la forme d'une machine synchrone à excitation permanente.

20. Transmission électrique (1) selon une des revendications 1 à 18, dans laquelle la deuxième machine (M2) est réalisée sous la forme d'une machine asynchrone à double alimentation.

21. Procédé pour faire fonctionner une transmission électrique (1), en particulier pour un véhicule automobile ou hybride (5) **caractérisé par** les étapes suivantes :

   - préparer une première machine électrique (M1) réalisée en particulier sous la forme d'une machine asynchrone à excitation permanente, qui présente un stator (20, $S_1$) et un rotor ($R_1$) qui peut être relié à un moteur à combustion interne (4) par l'intermédiaire d'un premier arbre (3, W1) et être entraîné par ce moteur,
   - préparer une deuxième machine électrique (M2) réalisée en particulier à la façon d'une cascade de machines sous la forme d'une machine asynchrone à double alimentation, qui présente un premier rotor ($R_1$) et un deuxième rotor ($R_2$) pouvant être relié à un deuxième arbre (16, W2), le deuxième rotor (R2), qui entoure coaxialement le premier rotor ($R_1$) présentant, pour la production d'un premier champ tournant (14), un enroulement intérieur (9, $S_{21}$) dirigé vers le premier rotor ($R_1$) et un enroulement extérieur (11, $R_{22}$) dirigé vers un stator (13, $S_{22}$) et qui est câblé avec le premier enroulement (9, $S_{21}$) pour la production d'un deuxième champ tournant (15) de sens inverse de celui du premier champ tournant (14), et

- commander les deux machines électriques (M1, M2) au moyen d'un dispositif de commande et/ou de régulation (19, 25) de telle manière qu'en cas de besoin, de la puissance (P) soit introduite dans la deuxième machine en provenant aussi bien du rotor ($R_1$) de la première machine (M1) que du stator (23, $S_{22}$) de la deuxième machine (M2) et en sorte sans contact.

22. Procédé selon la revendication 21, dans lequel une répartition de puissance électrique, en particulier pour un véhicule automobile ou hybride (5) est commandée au moyen du dispositif de commande ou de régulation (19, 25).

23. Procédé selon la revendication 21 ou 22, dans lequel de la puissance mécanique développée sur le premier arbre (3) est prélevée par la deuxième machine (M2) et cédée par cette dernière, par l'intermédiaire du dispositif de commande et de régulation (19, 25), au moins en partie sous forme de puissance électrique, à un onduleur (IV2) associé à la deuxième machine (M2) et aussi, sous forme de puissance mécanique. au deuxième arbre (16).

24. Procédé selon une des revendications 21 à 23, dans laquelle la puissance électrique prélevée par la deuxième machine (M2) est envoyée à un accumulateur électrique (24) ou à la première machine (M1)

25. Procédé selon une des revendications 21 à 24, dans laquelle une puissance de freinage ou énergie de freinage reçue par la deuxième machine (M2) par l'intermédiaire du deuxième arbre (16) est cédée à travers la deuxième machine (M2), sous forme d'énergie de récupération accumulable, au dispositif de commande ou de régulation (19, 25), en particulier à un onduleur (IV2) associé à la deuxième machine (M2).

26. Procédé selon une des revendications 21 à 25, dans lequel une puissance de freinage ou énergie de freinage reçue par la deuxième machine (M2) par l'intermédiaire du deuxième arbre (16) est transmise à travers la deuxième machine à la première machine (M1) et/ou cédée à un onduleur (IV1) associé à celle-ci en tant qu'énergie de récupération accumulable.

27. Procédé selon une des revendications 21 à 26, dans lequel pour le lancement d'un moteur à combustion interne (4) accouplé au premier arbre (3)), la première machine (M1). est alimentée en courant par l'intermédiaire du dispositif de commande ou de régulation (19, 25) alors qu'en même temps, la deuxième machine est hors tension.

28. Procédé selon une des revendications 21 à 27, dans lequel un véhicule automobile ou hybride (4) entraîné au moyen de la transmission électrique (1) est mis en marche et/ou propulsé exclusivement avec la deuxième machine (M2).

FIG 1

FIG 2

$M_{22}$

$P_{R22}$

0

0

$f_{S22}$

$f_{mW2}$

K1

FIG 3

$P_{SP}$

$P_{S22}$

$P_{M1}$

$P_{mW1}$

$P_{R22}$

$P_{mM2}=0$

$P_{V}$

$P_{mW2}=0$

M1    M2

EP 1 746 714 B1

FIG 4

FIG 5

19

FIG 6

FIG 7

FIG 8

FIG 9

**IN DER BESCHREIBUNG AUFGEFÜHRTE DOKUMENTE**

**In der Beschreibung aufgeführte Patentdokumente**

- EP 1480321 A1
- WO 03075437 A1